# EUROPÄISCHE PATENTSCHRIFT

(11) **EP 1 770 000 B1**
(45) Veröffentlichungstag und Bekanntmachung des Hinweises auf die Patenterteilung: **17.11.2010**
(21) Anmeldenummer: 06018507.1
(22) Anmeldetag: 05.09.2006
(51) Int. Cl.: B62D 5/06, F02B 67/04

(54) **Kraftfahrzeug mit Lenkhilfepumpe und Luftpresser**
Motor vehicle comprising a power steering pump and an air compressor
Véhicule automobile comprenant une pompe d'assistance de direction et un compresseur d'air

(30) Priorität: 08.09.2005 AT 14622005
(43) Veröffentlichungstag der Anmeldung: 04.04.2007
(73) Patentinhaber: MAN Nutzfahrzeuge Österreich AG, 4400 Steyr (AT)
(72) Erfinder: Leitenmayr, Franz, 4320 Perg (AT); Raab, Gottfried, 4320 Perg (AT); Rammer, Franz, 4493 Wolfern (AT)

(56) Entgegenhaltungen:
- DE-A1- 2 213 303
- DE-A1- 19 722 336
- JP-A- 10 030 449

## Beschreibung

Die Erfindung betrifft ein Kraftfahrzeug, insbesondere Lastkraftwagen oder Omnibus, mit Merkmalen wie im Oberbegriff des Anspruchs 1 angegeben. Ein derartiges Kraftfahrzeug ist zum Beispiel aus der GB 2 122 268 A bekannt.

Es ist bekannt, eine Lenkhilfepumpe und einen Luftpresser getrennt voneinander an einem Antriebsmotor anzubauen und getrennt voneinander vom Antriebsmotor her über einen Getriebezug anzutreiben. Außerdem ist es bekannt, die Lenkhilfepumpe vom Luftpresser aus anzutreiben. Da der Luftpresser in der Regel nicht ständig betrieben wird, ergibt sich das Problem, dass bei Luftpresser-Stillstand auch die Lenkhilfepumpe nicht arbeitet, was zu Lenkungsproblemen führt.

Aus der JP 10-30449 A ist auch schon ein Fahrzeug bekannt, mit einem Antriebsmotor, einer von diesem aus angetriebenen Lenkhilfepumpe und einem Kompressor, der von der Lenkhilfepumpe her angetrieben und von diesem Antrieb durch eine zwischen Lenkhilfepumpe und Kompressor angeordnete schaltbare Kupplung an- und abkoppelbar ist. Bei diesem Kompressor handelt es sich aber definitiv nicht um einen das fahzeuginterne Druckluftnetz mit Druckluft versorgenden Luftpresser.

Ferner ist aus der DE 2213303 A ein von einer Brennkraftmaschine abgeleiteter Nebenabtrieb für Hilfsaggregate bekannt. Bei diesen Hilfsaggregaten kann es sich z.B. um die Lenkhilfepumpe, einen Klimakompressor, ein Kühlluftgebläse und dergleichen handeln. Der betreffende Nebenabtrieb beinhaltet zur zentralen Krafteinleitung ein Keilriemenregelgetriebe mit einer auf der Kurbelwelle der Brennkraftmaschine sitzenden Primär-Riemenscheibe und einer Sekundär-Riemenscheibe, über die eine dem Kühlluftgebläse und einer Wasserpumpe gemeinsame Welle antreibbar ist. Über ein Vorgelege werden von der Kurbelwelle der Brennkraftmaschine außerdem ein Generator und eine weitere Servopumpe angetrieben. Ein zur Versorgung eines bordinternen Druckluftnetzes dienender Luftpresser ist bei dieser bekannten Anordnung aber nicht vorgesehen.

Es ist daher Aufgabe der Erfindung, bei einem Kraftfahrzeug der gattungsgemäßen Art einen günstigeren Antrieb für die Lenkhilfepumpe und den das bordinteme Druckluftnetz mit Druckluft versorgenden Luftpresser zu schaffen.

Diese Aufgabe ist erfindungsgemäß durch ein Kraftfahrzeug mit den im Anspruch 1 gekennzeichneten Merkmalen gelöst.

Eine vorteilhafte Ausgestaltung der Erfindung ist im Unteranspruch angegeben.

Aufgrund der erfindungsgemäßen An- und Zuordnung von Luftpresser und Lenkhilfepumpe ist nur ein Antriebszug notwendig. Durch die zwischen Lenkhilfepumpe und Luftpresser eingebaute Kupplung kann der Luftpresser problemlos abgeschaltet werden, die Lenkhilfepumpe bleibt aber in Betrieb und stellt so ein einwandfreies Lenkverhalten im Kraftfahrzeug sicher.

Durch die erfindungsgemäße Zuordnung und Antriebsverbindung von Lenkhilfepumpe und Luftpresser über die Kupplung ist eine kompakte Baueinheit dieser Aggregate darstellbar, was auch den Montageaufwand vereinfacht sowie Platz am Antriebsmotor spart und Kostenvorteile erbringt.

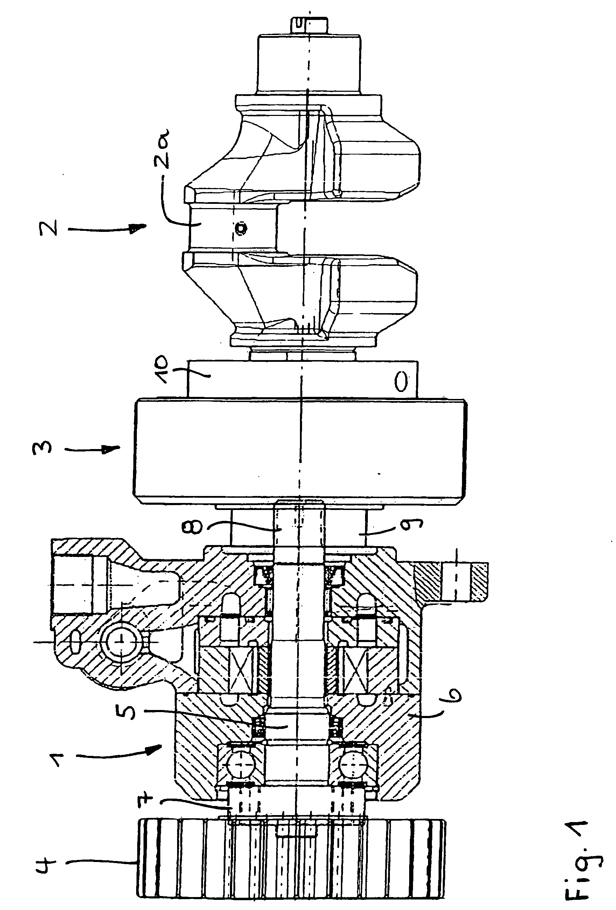

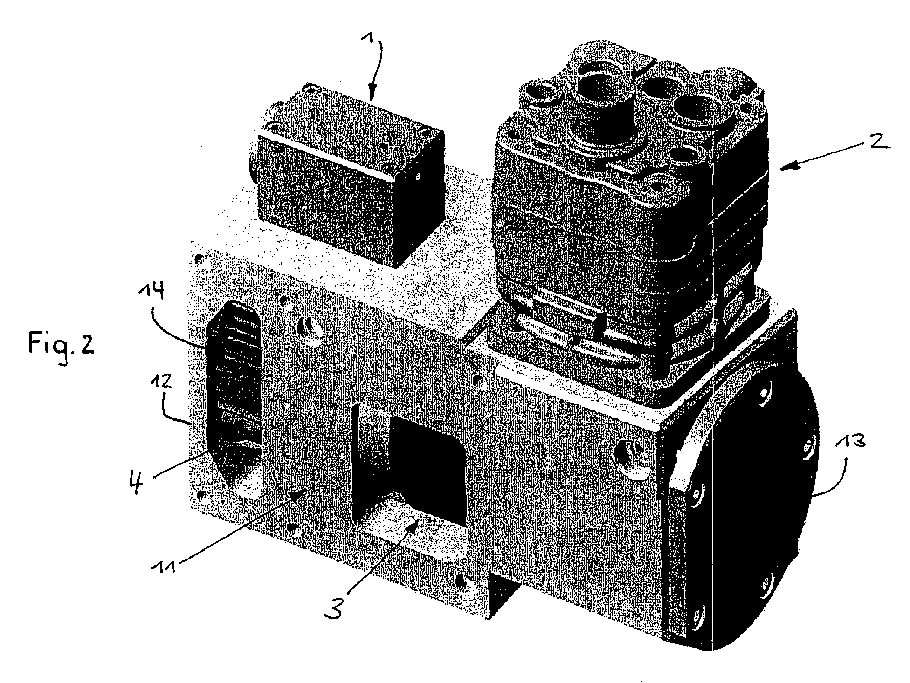

Nachstehend ist die erfindungsgemäße Lösung anhand zweier in Fig. 1 und Fig. 2 dargestellter Ausführungsbeispiele noch näher erläutert.

In Fig. 1 ist mit 1 eine Lenkhilfepumpe, mit 2 ein Luftpresser - nur durch seine Kurbelwelle 2a angedeutet -, mit 3 eine zwischen Lenkhilfepumpe 1 und Luftpresser 2 eingebaute schaltbare Kupplung 3 und mit 4 ein Antriebsritzel bezeichnet. Das Antriebsritzel 4 sitzt auf der Welle 5 der Lenkhilfepumpe 1 und zwar auf einem deren Gehäuse 6 auf der einen Seite überragenden Wellenteil 7. An einem auf der gegenüberliegenden Seite des Gehäuses 6 heraustragenden Wellenteil 8 der Welle 5 ist der mechanische Eingang 9 der Kupplung 3 angeschlossen. Der koaxiale mechanische Ausgang 10 der Kupplung 3 ist mit der hierzu koaxialen Kurbelwelle 2a des Luftpressers 2 verbunden. Das Antriebsritzel 4 ist mit einem an einen nicht dargestellten Antriebsmotor angeordneten Getriebezug (ebenfalls nicht dargestellt) antriebsmäßig verbunden. Auf diese Weise ist der Luftpresser 2 von der Lenkhilfepumpe 1 her über die Kupplung 3 angetrieben und bei weiter laufender Lenkhilfepumpe 1 von dieser durch die Kupplung 3 antriebsmäßig ab- und bei Bedarf wieder zuschaltbar.

Fig. 2 zeigt eine sehr kompakte Ausführungsform der erfindungsgemäßen Lösung. Dabei sind die Lenkhilfepumpe 1, die Kupplung 3 und der Luftpresser 2 in ihrer erfindungsgemäßen Zuordnung in einem gemeinsamen Gehäuse 11 zu einem vergleichsweise klein bauenden Geräteaggregat zusammengefasst. Das Antriebsritzel 4 kann dabei entweder außerhalb des Gehäuses 11 oder aber bevorzugt ebenfalls innerhalb des Gehäuses 11 angeordnet sein. Dieses begünstigt die Lagerung der Wellenenden der Wellen 5 und 2a in einer Stirnwand 12 sowie einen Gehäusedeckel 13 am Gehäuse 11. Die Antriebsverbindung vom Getriebezug zu dem intern des Gehäuses 11 angeordneten Antriebsritzel 4 erfolgt durch eine Öffnung 14 in einer Außenwand des Gehäuses 11.

Dieses in Fig. 2 gezeigte Geräteaggregat wird als komplett vormontierte Baueinheit am Antriebsmotor angebaut und befestigt, wobei gleichzeitig auch die Antriebsverbindung zwischen Getriebezug und Antriebsritzel 4 hergestellt wird. Anschließend werden an diesem Geräteaggregat die hydraulischen und pneumatischen Zu- und Ableitungen sowie elektrischen Steuerleitungen angeschlossen.

## Patentansprüche

1. Kraftfahrzeug, insbesondere Lastkraftwagen oder Omnibus, mit einem Antriebsmotor, einer vom Antriebsmotor aus angetriebenen Lenkhilfepumpe und einem Luftpresser zur Versorgung eines bordintemen Druckluftnetzes, **dadurch gekennzeichnet, dass** der zur Versorgung des bordintemen Druckluftnetzes dienende Luftpresser (2) von der Lenkhilfepumpe (1) her angetrieben und von diesem Antrieb durch eine zwischen Lenkhilfepumpe (1) und Luftpresser (2) angeordnete schaltbare Kupplung (3) an- und abkoppelbar ist, und dass dieser Luftpresser (2) zusammen mit der ihn antreibenden Lenkhilfepumpe (1) und der Kupplung (3) eine kompakte, in einem gemeinsamen Gehäuse (11) zusammengefasste Baueinheit bildet.

2. Kraftfahrzeug nach Anspruch 1, **dadurch gekennzeichnet, dass** die Welle (5) der Lenkhilfepumpe (1) auf der der Kupplung (3) gegenüberliegenden Seite ein Antriebsritzel (4) trägt, das mit einem am Antriebsmotor gegebenen Getriebezug antriebsmäßig verbunden ist, dass das Antriebsritzel (4) in das gleiche gemeinsame Gehäuse (11) für Lenkhilfepumpe (1), Kupplung (3) und Luftpresser (2) integriert ist, dass dieses Gehäuse (11) außen am Antriebsmotor angebaut ist und dass die Verbindung zwischen dem Getriebezug und dem Antriebsritzel (4) durch eine Öffnung (14) in einer Außenwand des Gehäuses (11) hindurch erfolgt.

## Claims

1. A motor vehicle, in particular a commercial vehicle or bus, with a drive motor, a power steering pump driven from the drive motor and an air compressor to supply an on-board compressed air system, **characterised in that** the air compressor (2) that serves to supply the on-board compressed air system is driven from the power steering pump (1) and said air compressor (2) can be coupled and de-coupled from this drive by a shiftable clutch (3) positioned between the power steering pump (1) and air compressor (2), and that said air compressor (2) forms, together with the power steering pump (1) driving the air compressor and the clutch (3), a compact assembly combined in a common housing (11).

2. A motor vehicle according to claim 1, **characterised in that** the shaft (5) of the power steering pump (1) incorporates a drive pinion (4) on the opposite side to the clutch (3), which drive pinion (4) is drive-connected to a gear train positioned on the drive motor, that the drive pinion (4) is integrated into the same common housing (11) for the power steering pump (1), clutch (3) and air compressor (2), that this housing (11) is provided externally on the drive motor and that the connection between the gear train and the drive pinion (4) is provided through an opening (14) in an outer wall of the housing (11).

## Revendications

1. Véhicule motorisé, en particulier camion ou bus, avec un moteur de propulsion, une pompe d'assistance de direction entraînée par le moteur de propulsion et un compresseur d'air pour alimenter un réseau d'air comprimé à bord, **caractérisé en ce que** le compresseur d'air (2) servant à alimenter le réseau d'air comprimé à bord est entraîné par la pompe d'assistance de direction (1) et peut être couplé et découplé de cet entraînement par le biais d'un embrayage (3) commutable, disposé entre la pompe d'assistance de direction (1) et le compresseur d'air (2), et **en ce que** ce compresseur d'air (2) forme, en association avec la pompe d'assistance de direction (1) qui l'entraîne et l'embrayage (3), une unité de construction compacte, regroupée dans un carter commun (11).

2. Véhicule motorisé selon la revendication 1, **caractérisé en ce que** l'arbre (5) de la pompe d'assistance de direction (1) porte un pignon d'entraînement (4) sur le côté opposé à l'embrayage (3), ce pignon étant relié à un train d'engrenages d'entraînement présent sur le moteur de propulsion, **en ce que** le pignon d'entraînement (4) est intégré au même carter commun (11) à la pompe d'assistance de direction (1), à l'embrayage (3) et au compresseur d'air (2), **en ce que** ce carter (11) est monté à l'extérieur au niveau du moteur de propulsion et **en ce que** la liaison entre le train d'engrenages et le pignon d'entraînement (4) est assurée par une ouverture (14) réalisée dans une paroi extérieure du carter (11).
